(19) Europäisches Patentamt
European Patent Office
Office européen des brevets

(11) **EP 4 668 033 A1**

(12) **EUROPEAN PATENT APPLICATION**
published in accordance with Art. 153(4) EPC

(43) Date of publication:
**24.12.2025 Bulletin 2025/52**

(21) Application number: **23925108.5**

(22) Date of filing: **28.12.2023**

(51) International Patent Classification (IPC):
*G05B 19/04* (2006.01)

(52) Cooperative Patent Classification (CPC):
**G05B 19/04; Y02E 10/72**

(86) International application number:
**PCT/CN2023/142611**

(87) International publication number:
**WO 2024/179163 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2023 CN 202310212710**

(71) Applicant: **Beijing Goldwind Science & Creation Windpower Equipment Co. Ltd.**
**Beijing 100176 (CN)**

(72) Inventors:
• **MI, Yuxia**
**Beijing 100176 (CN)**
• **ZHANG, Pengfei**
**Beijing 100176 (CN)**
• **HAN, Wei**
**Beijing 100176 (CN)**

(74) Representative: **Gulde & Partner**
**Patent- und Rechtsanwaltskanzlei mbB**
**Berliner Freiheit 2**
**10785 Berlin (DE)**

(54) **CONTROL METHOD, DEVICE, AND SYSTEM FOR WIND TURBINE SET, AND STORAGE MEDIUM**

(57) The present disclosure provides a control method, device, and system for a wind turbine set, and a storage medium. The control method comprises: acquiring a preset value of a control parameter and a plurality of historical measurement signals of a wind turbine set in a historical time period; according to the preset value and the plurality of historical measurement signals, determining an estimated distribution parameter of a control signal at a current moment; and determining the control signal at the current moment according to the estimated distribution parameter of the control signal at the current moment.

| Acquire a preset value and multiple historical measured signals of a control parameter of a wind turbine during a historical time period | S101 |
| Determine a predictive distribution parameter for a control signal at a current time instant based on the preset value and the multiple historical measurement signals | S102 |
| Determine the control signal at the current time instant based on the predictive distribution parameter for the control signal at the current time instant | S103 |

**FIG. 2**

## Description

### FIELD

The present disclosure relates to the technical field of wind power generation, and in particular to a control method, apparatus and system for a wind turbine, and a storage medium.

### BACKGROUND

Currently, in a control system for a wind turbine, PID control is mainly used, that is, control based on proportional, integral, and derivative, in which a control amount is generated by linearly combining the proportional, integral, and derivative terms of a deviation between a preset value and an actual output value of a control parameter, to control a controlled object. However, currently, the actual output value is obtained through measuring by a sensor, resulting in uncertainties, and leading to control inaccuracies. Meanwhile, replacing the sensor with a higher-precision sensor typically involves high costs.

### SUMMARY

Therefore, how to improve the control accuracy of a wind turbine at a low cost is of critical importance.

In one general aspect, a control method for a wind turbine is provided, including: acquiring a preset value and multiple historical measured signals of a control parameter of the wind turbine during a historical time period; determining a predictive distribution parameter for a control signal at a current time instant based on the preset value and the multiple historical measured signals; and determining the control signal at the current time instant based on the predictive distribution parameter for the control signal at the current time instant.

In another general aspect, a control apparatus for a wind turbine is provided, including an acquisition unit, a determination unit, and a control unit. The acquisition unit is configured to acquire a preset value and multiple historical measured signals of a control parameter of the wind turbine during a historical time period. The determination unit is configured to determine a predictive distribution parameter for a control signal at a current time instant based on the preset value and the multiple historical measured signals. The control unit is configured to determine the control signal at the current time instant based on the predictive distribution parameter for the control signal at the current time instant.

In another general aspect, a control system for a wind turbine is provided, including a measurement sensor, a processor, and a control decision device. The measurement sensor is configured to collect a measured signal of a control parameter. The processor is configured to: acquire a preset value and multiple historical measured signals of a control parameter of the wind turbine during a historical time period; and determine a predictive distribution parameter for a control signal at a current time instant based on the preset value and the multiple historical measured signals. The control decision device is configured to determine the control signal at the current time instant based on the predictive distribution parameter for the control signal at the current time instant.

In another general aspect, a computer-readable storage medium is provided. Instructions in the computer-readable storage medium, when executed by at least one processor, cause the at least one processor to perform the control method for a wind turbine as described above.

In another general aspect, a computer device is provided, including at least one processor; and at least one memory storing computer-executable instructions. The computer-executable instructions, when executed by the at least one processor, cause the at least one processor to perform the control method for a wind turbine as described above.

A control method, apparatus and system for a wind turbine, and a storage medium are provided according to the present disclosure. By acquiring a preset value and multiple historical measured signals of a control parameter during a historical time period, the uncertainty of a measured signal at a current time instant can be reflected through the multiple historical measured signals, thereby obtaining a predictive distribution parameter for a control signal at the current time instant in combination with the preset value of the control parameter. Compared with the conventional solution in which the control signal at the current time instant is directly determined based on the measured signal at the current time instant, the control signal is determined from a probabilistic and statistical perspective while fully considering the uncertainty of the measured signal according to the present disclosure, releasing the impact of the uncertainty of the conventional measurement sensor on control accuracy without additional expensive high-precision sensors, and achieving the improvement of control accuracy at low cost.

Furthermore, by acquiring a distribution parameter of control deviations during a reference time period, a potential control deviation of a new control signal can be predicted in advance from a probabilistic and statistical perspective, implementing a correction to the predictive distribution parameter for a control signal at the current time instant, and further improving the control accuracy.

It should be understood that the above general description and the detailed description hereinafter are only illustrative and explanatory and do not limit the present disclosure.

## BRIEF DESCRIPTION OF THE DRAWINGS

FIG. 1 is a schematic diagram showing a control process executed by a control system for a wind turbine according to a specific embodiment of the present disclosure;

FIG. 2 is a flowchart of a control method for a wind turbine according to an embodiment of the present disclosure;

FIG. 3 is a schematic diagram showing a probability density function of measured signals according to an embodiment of the present disclosure;

FIG. 4 is a schematic flowchart of control deviation analyzing according to an embodiment of the present disclosure;

FIG. 5 is a schematic statistical diagram of control deviations according to an embodiment of the present disclosure;

FIG. 6 is a schematic distribution diagram of control deviations according to an embodiment of the present disclosure;

FIG. 7 is a block diagram of a control apparatus for a wind turbine according to an embodiment of the present disclosure; and

FIG. 8 is a block diagram of a computer device according to an embodiment of the present disclosure.

## DETAILED DESCRIPTION

Detailed embodiments are provided below to help readers to gain a comprehensive understanding of the method, device, and/or system described herein. After understanding the present disclosure, various changes, modifications, and equivalents of the method, device, and/or system described herein would be clear. For example, an order of operations described herein is only an example and is not limited to those orders described herein, but may be changed as would be clear after understanding the present disclosure, except for operations that must occur in a specific order. In addition, descriptions of features known in the art may be omitted for greater clarity and conciseness.

The features described herein may be implemented in different forms and should not be limited to the examples described herein. The examples described herein have been provided to illustrate only some of the multiple feasible ways to implement the methods, devices, and/or systems described herein, and many other feasible ways would be clear after the present disclosure to be understood.

As used herein, term "and/or" includes any one of listed items associated with the term, and any combination of any two or more of the items.

Although terms such as "first," "second," "third" may be used herein to describe various members, components, regions, layers, or parts, these members, components, regions, layers, or parts should not be limited by these terms. The items are only used to distinguish a member, a component, a region, a layer, or a part from another member, another component, another region, another layer, or another part. Therefore, without departing from the teachings of the examples, a first member, a first component, a first region, a first layer, or a first part referred to in the examples described herein may also be referred to as a second member, a second component, a second region, a second layer, or a second part.

In the specification, an element (such as a layer, a region, or a substrate) described as being "on", "connected to", or "bonded to" another element may be directly "on", "connected to", or "bonded to" another element, or there may be one or more other elements between the two elements. On the contrary, when an element is described as "directly on" another element, "directly connected to" or "directly bonded to" another element, there may be no other elements between the two elements.

The terms used herein are only for describing various examples and are not used to limit the present disclosure. Unless explicitly indicated in the context, a singular form also includes a plural form. The terms "include," "comprise," and "have" indicate the existence of a described feature, quantity, operation, component, element, and/or combination thereof, but do not exclude the existence or addition of one or more other features, quantities, operations, components, elements, and/or combinations thereof.

Unless otherwise defined, all terms (including technical terms and scientific terms) used herein have the same meanings as those commonly understood by an ordinary technical personnel in the art to which the present disclosure belongs upon the understanding of the present disclosure. Unless explicitly defined herein, terms (such as terms defined in a general dictionary) should be interpreted as having meanings consistent with the meaning in the contexts of the relevant art and in the present disclosure, and should not be interpreted in an idealized or too formal manner.

In addition, in the description of the examples, the detailed description of well-known relevant structures or functions is omitted when it is considered that the detailed description may lead to ambiguity in the present disclosure.

A control system for a wind turbine is provided according to the present disclosure, including a measurement sensor, a processor, and a control decision device. The measurement sensor is configured to collect a measured signal of a control parameter, where a conventional measurement sensor may be used to reduce costs. The processor is configured to acquire a preset value and multiple historical measured signals of the control parameter of the wind turbine during a historical time period, thereby reflecting the uncertainty of the measured signal. The processor is further configured to determine a predictive distribution parameter for a control signal at a current time instant based on the preset value and the multiple historical measured signals. The conventional PID control algorithm may be applied to determine the control signal based on the preset value and the measured signals. Based on this, a statistical algorithm may further be used to process the determined multiple control signals, thereby obtaining the predictive distribution parameter for the control signal at the current time instant. The control decision device is configured to determine the control signal at the current time instant based on the predictive distribution parameter for the control signal at the current time instant, providing the control signal from a probability and statistical perspective, and further controlling the operation of the wind turbine based on the control signal.

Compared with the conventional control system in which the control signal at the current time instant is directly determined based on the measured signal at the current time instant, the control signal is determined from a probability and statistical perspective while fully considering the uncertainty of the measured signal according to the control system in the present disclosure. Thus, the impact of the uncertainty of the conventional measurement sensor on control accuracy is released without an additional expensive high-precision sensor, achieving the improvement in control accuracy at a low cost.

It should be understood that the control system according to the present disclosure may be a standalone control system for a wind turbine or a farm-level control system for a wind farm. The measurement sensor is a separate sensing component. The processor and the control decision device are configured to perform data processing, which may be two separate chips connected through wired or wireless ways (hereinafter simply referred to as "connected", and unless otherwise specified, all connections refer to wired or wireless connections) for data transmission, or may be integrated into a single chip. Furthermore, as will become apparent from the following description, the processor may further include a first signal analyzer and a first controller, and may further include a second signal analyzer and a second controller. In this regard, the components included in the processor may be divided and manufactured as at least two chips. For example, the first signal analyzer, the first controller, the second signal analyzer, and the second controller may be manufactured as four independent but interconnected chips. As another example, the first signal analyzer and the second signal analyzer may be integrated into a single signal analyzer chip, and the first controller and the second controller may be integrated into a single controller chip. Further, the control decision device may be integrated with the first controller and/or the second controller into a single chip. The above describes exemplary implementations of various components in the control system of the present disclosure and should not be considered as limiting the present disclosure.

In an embodiment, the processor is further configured to: acquire one or more reference measured signals based on the multiple historical measured signals; and determine the predictive distribution parameter for the control signal at the current time instant based on the one or more reference measured signals and the preset value.

In an embodiment, the processor includes a first signal analyzer and a first controller. The first signal analyzer is configured to perform fitting processing on the multiple historical measured signals, to obtain a distribution parameter of the multiple historical measured signals. The first controller is configured to perform discretization processing on the distribution parameter of the multiple historical measured signals, to obtain the one or more reference measured signals and one or more reference measured signal probabilities of respective reference measured signals.

In an embodiment, the first controller is further configured to: determine one or more reference control signals respectively corresponding to the one or more reference measured signals based on the one or more reference measured signals and the preset value, and determine the one or more reference measured signal probabilities of the respective reference measured signals as one or more reference control signal probabilities respectively; and perform fitting processing on the determined one or more reference control signals and the one or more reference control signal probabilities of respective reference control signals, to obtain the predictive distribution parameter for the control signal at the current time instant.

In an embodiment, the first signal analyzer is further configured to fitting processing on the multiple historical measured signals based on a reference distribution type, to obtain the distribution parameter of the multiple historical measured signals. The reference distribution type is related to the measurement sensor; or the reference distribution type is obtained by: counting respective occurrence numbers of the multiple historical measured signals, to obtain a counting result of the multiple historical measured signals; and determining one distribution type from multiple candidate distribution types as the reference distribution type based on the counting result.

In an embodiment, the processor further includes a second signal analyzer and a second controller. The second signal analyzer is configured to acquire a distribution parameter of control deviations during a reference time period, where each control deviation of the control deviations is a deviation between a measured signal and the preset value. The second controller is configured to correct the predictive distribution parameter for the control signal at the current time instant based on the distribution parameter of the control deviations during the reference time period, to obtain a corrected distribution parameter for the control signal at the current time instant. The control decision device is further configured to determine the control signal at the current time instant based on the corrected distribution parameter for the control signal at the current time instant.

In an embodiment, the second signal analyzer is further configured to: determine multiple consecutive preset durations starting from a start time instant; count occurrence numbers of respective control deviations within the first i preset durations, to obtain an i-th counting result, where i is a positive integer; perform fitting processing on the i-th counting result to obtain an i-th distribution parameter of control deviations; in response to the i-th distribution parameter of control deviations and an (i-1)-th distribution parameter of control deviations not satisfying a preset approximation condition, increment i by 1 and repeat the steps of counting occurrence numbers of respective control deviations within the first i preset durations, performing the fitting process, and determining whether the preset approximation condition is satisfied; and in response to the i-th distribution parameter of control deviations and the (i-1)-th distribution parameter of control deviations satisfying the preset approximation condition, determine the i-th distribution parameter of control deviations as the distribution parameter of the control deviations during the reference time period, determine a time period corresponding to the first i preset durations as the reference time period, determine an end time instant of an i-th preset duration as a start time instant of a new reference time period, and for the new reference time period, repeat the steps of counting occurrence numbers of respective control deviations within the first i preset durations, performing the fitting process, and determining whether the preset approximation condition is satisfied.

In an embodiment, the second controller is further configured to: perform discretization processing on the predictive distribution parameter for the control signal at the current time instant to obtain multiple control signals and multiple control signal probabilities of respective control signals; perform discretization processing on the distribution parameter of the control deviations during the reference time period to obtain multiple control deviations and multiple control deviation probabilities of respective control deviations; for each control signal of the multiple control signals and each control deviation of the multiple control deviations, perform a superposition correction process to obtain a corrected control signal, and determine a product of a control signal probability of the control signal and a control deviation probability of the control deviation as a corrected probability of the corrected control signal; and perform fitting processing on the obtained corrected control signals and corrected probabilities of respective corrected control signals to obtain the corrected distribution parameter for the control signal at the current time instant.

In an embodiment, the control decision device is further configured to: determine the control signal at the current time instant based on the predictive distribution parameter for the control signal at the current time instant, a correspondence between the control signal and a load, and a reference load range.

In an embodiment, the control decision device is further configured to: determine a probability of the load falling within the reference load range as a reference probability based on the predictive distribution parameter for the control signal at the current time instant, the correspondence between the control signal and the load, and the reference load range; determine a reference control signal range corresponding to the reference load range in response to the reference probability being greater than or equal to a probability threshold; determine power generation quantities respectively corresponding to multiple reference control signals within the reference control signal range based on a correspondence between a control signal and a power generation quantity; and determine the control signal at the current time instant from the multiple reference control signals based on the power generation quantities respectively corresponding to the multiple reference control signals.

In an embodiment, the control decision device is further configured to: determine a reference control signal corresponding to an upper limit value of the reference load range as the control signal at the current time instant in response to the reference probability being less than the probability threshold.

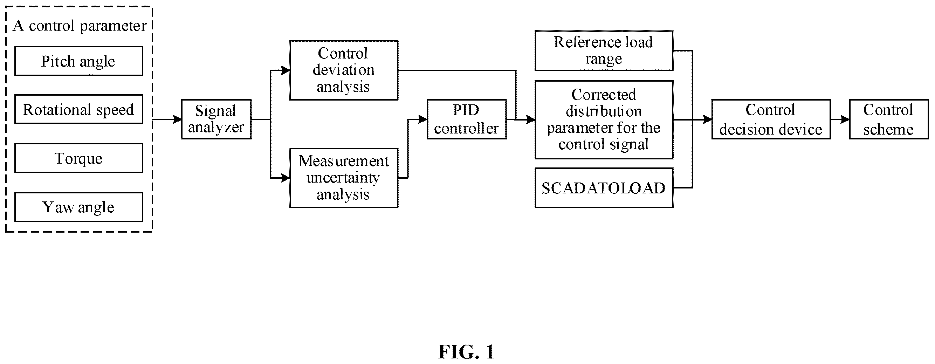

FIG. 1 is a schematic diagram showing a control process executed by a control system for a wind turbine according to a specific embodiment of the present disclosure. In the specific embodiment, the control system includes a conventional measurement sensor, as well as a processor and a control decision device. The processor includes a first signal analyzer, a first controller, a second signal analyzer, and a second controller, where the first signal analyzer and the second signal analyzer are integrated into a signal analyzer chip, and the first controller and the second controller are integrated into a controller chip.

Referring to FIG. 1, taking a pitch angle, a rotational speed, a torque, and a yaw angle as control parameters, the control system operates for any one of these control parameters. The causes of control inaccuracy may be divided into two categories: one is uncertainty in a measurement process, and the other is a control deviation between a preset value of a control parameter and a measured signal actually detected after the wind turbine operates. Accordingly, on one hand, a preset value and multiple historical measured signals of a control parameter during a historical time period are inputted to the first signal analyzer, and the first signal analyzer performs measurement uncertainty analysis to obtain a distribution parameter of the historical measured signals. Based on this, the first controller then obtains feedback data of the PID control algorithm, such that potential measurement uncertainty from the measurement sensor can be taken into account during performing the PID control algorithm, and then the first controller outputs a control signal and statistics is performed to obtains a predicted distribution parameter for the control signal at a current time instant, thereby releasing the impact of measurement uncertainty. On the other hand, starting from a start time instant of a reference time period, accumulated control deviations are inputted to the second signal analyzer at a preset time interval. The second signal analyzer performs control deviation analysis to obtain a distribution parameter of the control deviations during the reference time period, so that a lag correction is performed on the predicted distribution parameter for the control signal obtained by the first controller to obtain a corrected distribution parameter for the control signal, thereby maintaining the robustness of the conventional PID control while achieving the predictive control effect.

On the basis of this, the control decision device can obtain a load distribution parameter corresponding to the corrected distribution parameter for the control signal in combination with the conventional SCADATOLOAD method, that is, a method in which a turbine load is derived from measured signals of the turbine of, for example, the pitch angle, the rotational speed, the torque, and the yaw angle. Given a reference load range for a certain key load component, a reference probability of the key load component falling within the reference load range may be calculated based on the load distribution parameter. Combining the reference probability, in response to the reference probability being greater than or equal to a probability threshold, control scheme optimization is performed within a reference control signal range corresponding to the reference load range by using a power generation quantity as a reference, to determine a control scheme that ensures load safety and a relatively better power generation quantity, thereby maximizing the power generation quantity of the wind turbine while guaranteeing safe operation thereof. In response to the reference probability being less than the probability threshold, a control signal causing an upper limit load value of the reference load range is directly derived from the upper limit value, to determine a final control scheme, thereby quickly determining the control scheme and implementing wind turbine control, and enabling more accurate and timely control.

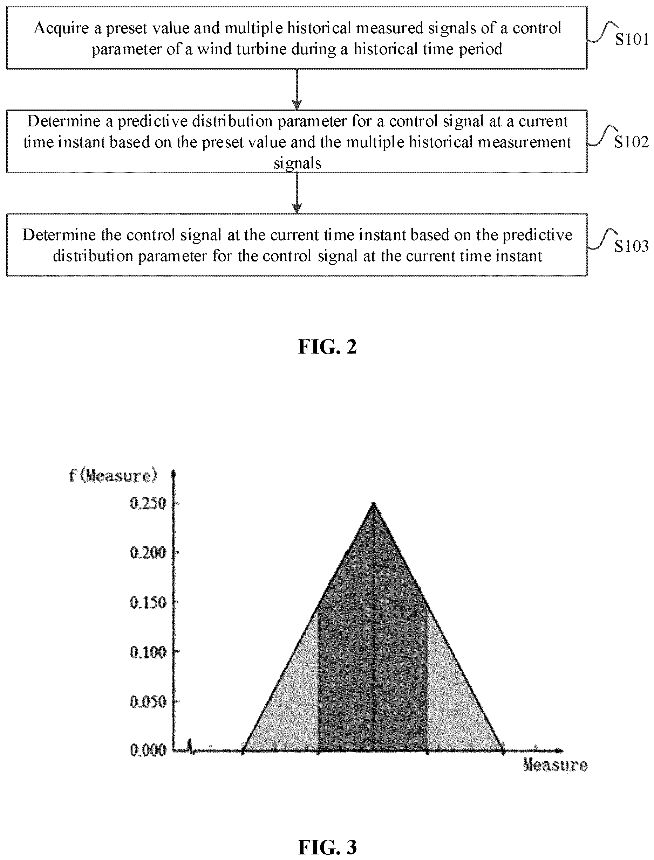

FIG. 2 is a flowchart of a control method for a wind turbine according to an embodiment of the present disclosure.

Referring to FIG. 2, in step S101, a preset value and multiple historical measured signals of a control parameter of the wind turbine during a historical time period are acquired.

The control parameter includes, but is not limited to, a pitch angle, a rotational speed, a torque, and a yaw angle. The preset value is a target value of the control parameter expected to be achieved through control. For example, if it is expected to adjust the pitch angle to 0°, the preset value of the pitch angle is 0°. The preset value typically remains constant during a time period. The historical measured signals, as the name suggests, are measured signals during the historical time period. The historical measured signals are electrical signals corresponding to the control parameter, and may be obtained by measuring the control parameter using a measurement sensor. In the control process, the conventional control method may output a control signal based on the preset value of the control parameter. The control signal acts on a corresponding execution mechanism, which can cause a change in the control parameter of the execution mechanism. An actual value of the control parameter is measured by the measurement sensor as a measured signal. Thus, at each time instant, the preset value, the control signal, and the measured signal of the control parameter are corresponding to each other, and the control signal and the measured signal fluctuate around the preset value. When the preset value changes, the control signal and the measured signal change accordingly.

According to the present disclosure, multiple historical measured signals are acquired to replace a measured signal at a current time instant when performing control at the current time instant, thereby reflecting the uncertainty of the measured signal at the current time instant. It should be understood that, to ensure that the acquired multiple historical measured signals can reflect the uncertainty of the measured signal at the current time instant, at least the preset value corresponding to the multiple historical measured signals should be kept unchanged and consistent with the preset value at the current time instant. Preferably, a historical time period near the current time instant may be selected. For example, a historical time period of 10-minutes before the current time instant may be selected. Since the historical time period is near the current time instant, the possibility of the historical measured signals being affected by other factors is relatively small, and the measurement uncertainty at the current time instant may be better reflected.

In step S102, a predictive distribution parameter for a control signal at the current time instant is determined based on the preset value and the multiple historical measured signals.

The uncertainty of the measured signal at the current time instant is taken into account in this step. Accordingly, the predictive distribution parameter for the control signal at the current time instant is determined, rather than a single definitive control signal, thus achieving probability-based control. For example, the multiple historical measured signals may directly serve as input data of a conventional control algorithm, such as feedback data of the PID algorithm. Based on each of the multiple historical measured signals and the preset value, a control signal corresponding to each of the multiple historical measured signals is determined. Then, statistical analysis is performed on the determined multiple control signals to obtain the predictive distribution parameter for the control signal at the current time instant. This processing method maintains the conventional control algorithm and reflects the uncertainty of the measured signal based on the multiple historical measured signals. Thus, the control signal is determined from a probabilistic and statistical perspective while fully considering the uncertainty of the measured signal, releasing the impact of the uncertainty of the conventional measurement sensor on control accuracy without expensive high-precision sensors, and achieving low-cost and high-precision control.

For example, the predictive distribution parameter refers to a parameter of a probability density function (PDF), such as a location parameter $\mu$ or a scale parameter $\sigma$ of normal distribution, though other parameters that can reflect distribution characteristics may be used, which is not limited in the present disclosure. The same applies to distribution parameters of other data, which will not be detailed hereafter.

In step S103, the control signal at the current time instant is determined based on the predictive distribution parameter for the control signal at the current time instant. Combining the predictive distribution parameter for the control signal at the current time instant, the control signal is determined from the probabilistic and statistical perspective, thereby improving the accuracy of the control signal.

The following provides further details on step S102.

In an embodiment, step S102 includes: acquiring one or more reference measured signals based on the multiple historical measured signals; and determining the predictive distribution parameter for the control signal at the current time instant based on the one or more reference measured signals and the preset value. By determining one or more reference measured signals based on the multiple historical measured signals, the one or more reference measured signals are determined as input data of the conventional control algorithm, which means that further processing may be performed on the multiple historical measured signals, thereby improving the accuracy of the predictive distribution parameter for the control signal at the current time instant.

Regarding how to acquire the one or more reference measured signals, in some embodiments, at least a portion of the multiple historical measured signals may be selected as the one or more reference measured signals. For example, all the multiple historical measured signals may be directly used as the one or more reference measured signals, or a portion of the multiple historical measured signals may be selected as the one or more reference measured signals according to certain rules. For example, the rules include, but not limited to, excluding the maximum and minimum values, which is not limited in the present disclosure.

In other embodiments, firstly, fitting processing is performed on the multiple historical measured signals to obtain a distribution parameter of the multiple historical measured signals; and then discretization processing is performed on the distribution parameter of the multiple historical measured signals to obtain the one or more reference measured signals and one or more reference measured signal probabilities of respective reference measured signals. The distribution parameter of the multiple historical measured signals is first obtained by the fitting processing, so that the distribution rule to which the historical measured signals conform is obtained from the limited number of the historical measured signals, and the obtaining the abstract rule from the concrete data is implemented. Then the discretization processing is performed on the obtained distribution parameter, so that the obtained reference measured signals conform to the obtained distribution parameter, that is, the abstract rule. In this way, the characterization accuracy of the measurement uncertainty is improved, being conductive to increasing the accuracy of the predictive distribution parameter for the control signal at the current time instant obtained thereby, and thus improving the control accuracy consequently.

For the aforementioned other embodiments, the step of determining the predictive distribution parameter for the control signal at the current time instant includes: determining one or more reference control signals respectively corresponding to the one or more reference measured signals based on each reference measured signal and the preset value, and determining the one or more reference measured signal probabilities of the respective reference measured signals as one or more reference control signal probabilities; and performing fitting processing on the determined one or more reference control signals and the one or more reference control signal probabilities of respective reference control signals to obtain the predictive distribution parameter for the control signal at the current time instant. The one or more reference measured signal probabilities of the respective reference measured signals are obtained based on the obtained distribution parameter of the multiple historical measured signals. The one or more reference measured signal probabilities of the respective reference measured signals are determined as the one or more reference control signal probabilities of the respective reference control signals corresponding to the reference measured signals, enabling a more accurate probabilistic description of the reference control signals based on the measurement uncertainty obtained by analyzing, and guaranteeing the accuracy of the obtained predictive distribution parameter for the control signal at the current time instant. It should be understood that the distribution type of the predictive distribution parameter for the control signal at the current time instant may be or may not be the same as the distribution type of the distribution parameter of the multiple historical measured signals, as a value of a reference measured signal and a value of a corresponding reference control signal are often not absolutely equal. The distribution type here refers to a probability distribution type, such as normal distribution or Gaussian distribution.

In addition, the fitting processing on the multiple historical measured signals in the aforementioned other embodiments may be performed according to a reference distribution type, so that the distribution parameter of the multiple historical measured signals is obtained relatively reliably by determining the parameter of the reference distribution type, thereby implementing the measurement uncertainty analysis.

For example, the reference distribution type is triangular distribution, *Measure* represents a measured signal, and a maximum value and a minimum value of the multiple historical measured signals [$Max_{Measure}$, $Min_{Measure}$] may be obtained respectively. A symmetric triangular distribution may be constructed based on [$Max_{Measure}$, $Min_{Measure}$], and the probability density function f(Measure) thereof is shown below and the schematic diagram is shown in FIG. 3.

$$f(measure) =$$

$$\begin{cases} (measure - Min_{Measure})/(Max_{Measure} - Min_{Measure})^2, Min_{Measure} \leq measure \leq (Max_{Measure} + Min_{Measure})/2 \\ (Max_{Measure} - measure)/(Max_{Measure} - Min_{Measure})^2, (Max_{Measure} + Min_{Measure})/2 \leq measure \leq Max_{Measure} \\ 0, otherwise \end{cases}$$

Regarding the determination of the reference distribution type, since the multiple historical measured signals are obtained by the measurement sensor and the uncertainty is often caused by an inherent error of the measurement sensor, the distribution type of the measured signals may be likely related to the measurement sensor. Thus, in an example, it is determined that the reference distribution type is related to the measurement sensor. By pre-analyzing the distribution types of signals respectively measured by different measurement sensors, a corresponding distribution type is determined according to a measurement sensor used to measure a respective measured signal as the reference distribution type, so that a relatively reliable reference distribution type is quickly and conveniently determined, and the efficiency of data analysis is improved. For example, distribution types may be matched to respective categories of the measurement sensors, and different distribution types may be determined for the measurement sensors with the same category and different precisions by further combining the precisions of the measurement sensors, which is not limited in the present disclosure.

In another example, the reference distribution type is obtained by: counting an occurrence number of each of the multiple historical measured signals to obtain a counter result of the multiple historical measured signals; and determining one distribution type from multiple candidate distribution types as the reference distribution type based on the counting result of the multiple historical measured signals. By performing actual analysis (that is, the counting) on the distribution of the multiple historical measured signals, and selecting a distribution type, similar to the distribution type to which the counting result corresponds, from multiple candidate distribution types, it is possible to perform independent analysis each time the measured signals are obtained, and increase the likelihood that the determined reference distribution type conforms to the distribution characteristics of the historical measured signals. For example, based on the occurrence number of each historical measured signal (that is, the number of occurring times of a value of each historical measured signal), a cumulative probability distribution (CPD, obtained by integrating the probability density function) value corresponding to the value of each historical measured signal may be obtained by performing statistical analysis and used as a statistical result. Then, for each candidate distribution type, a CPD value of the value of each measured signal value may be determined, and a candidate distribution type with CPD values which are closest to the statistical result may be selected as the reference distribution type. Alternatively, by taking the values of respective historical measured signals as coordinates on a horizontal axis, and taking the occurrence numbers of respective values as coordinates on a vertical axis, a distribution diagram of the historical measured signals is drawn. The distribution diagram is compared with a probability density function curve of each candidate distribution type. For example, a coincidence degree of the curve trend is calculated, and the candidate distribution type with the highest coincidence degree is selected as the reference distribution type. The present disclosure is not limited hereto.

As mentioned earlier, the causes of control inaccuracy may be divided into two categories: one is uncertainty in a measurement process, and the other is a control deviation between the preset value of the control parameter and the measured signal actually detected after the wind turbine operates. Step S102 addresses the uncertainty issue in the measurement process, and the following discusses the correction of the control deviation.

For the control deviation, before step S103, the control method according to the embodiments of the present disclosure may further include: acquiring a distribution parameter of control deviations during a reference time period, where a control deviation is a deviation between a measured signal and the preset value. Accordingly, step S103 includes: correcting the predictive distribution parameter for the control signal at the current time instant based on the distribution parameter of the control deviations during the reference time period, to obtain a corrected distribution parameter for the control signal at the current time instant; and determining the control signal at the current time instant based on the corrected distribution parameter for the control signal at the current time instant.

The control deviation, which is a deviation between a measured signal and the preset value, may be considered as a deviation between an actual control result and a desired control result. A larger control deviation indicates that a corresponding measured signal is farther from the preset value, and indicates a higher control lag degree and lower control accuracy. By acquiring the distribution parameter of the control deviations during the reference time period, a potential lag of the control signal is predicted from a probabilistic and statistical perspective in advance, thereby correcting the lagged control signal. That is, the predictive distribution parameter for the control signal at the current time instant is corrected to obtain the corrected distribution parameter for the control signal at the current time instant, thereby achieving predictive control of the wind turbine under complex and variable wind conditions and improving control accuracy.

From a temporal perspective, the current time instant represents the time instant when control is executed to achieve the preset value of the control parameter, that is, when it is determined to perform control according to the preset value and when the lag correction is performed based on the distribution parameter of the control deviations during the reference time period. An end time instant of the reference time period should be earlier than or exactly be the current time instant. That is, the analysis that is performed to obtain the distribution parameter of the control deviations during the reference time period is completed in a fastest manner upon reaching the end time instant of the reference time period and the obtained distribution parameter is immediately applied to the lag correction at the current time instant, after which the distribution parameter may continue to be used for the lag correction at subsequent time instants. Alternatively, the analysis that is performed to obtain the distribution parameter of the control deviations during the reference time period may be completed after the reference time period has passed for a time period, or the analysis result is applied to the lag correction at the current time instant after the reference time period has passed for a time period, ensuring the end time instant of the reference time period is always earlier than the current time instant, which is not limited in the present disclosure.

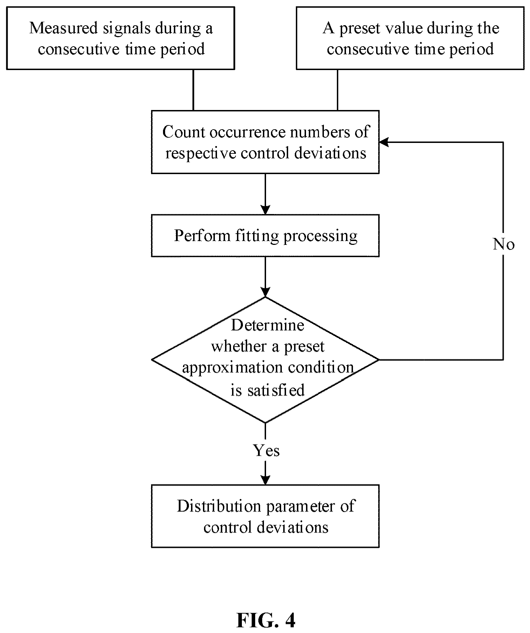

In an embodiment, referring to FIG. 4, the analysis of the control deviations, that is, the acquiring the distribution parameter of the control deviations during the reference time period, further includes the following steps.

In a first step, multiple consecutive preset durations are determined starting from a start time instant. It should be understood that a certain amount of control-deviation data should be accumulated before the analysis of the control deviations is performed. The start time instant is the time instant when the control-deviation data is recorded. By determining multiple consecutive preset durations, in subsequent steps, it is possible to perform, each time the control-deviation data within a preset duration is obtained for accumulating, statistical analysis on the accumulated control deviation data. The preset duration may be, for example but not limited to, 10 minutes. It should be noted that this step emphasizes the determination of the start time instant, which is not specifically shown in FIG. 4.

In a second step, occurrence numbers of respective control deviations within the first i preset durations are counted, to obtain an i-th counting result, where i is a positive integer. This step includes: performing counting of occurrence numbers on all control deviation data as accumulated from the start time instant to the current time instant at an interval of the preset duration. Thus, i is gradually increased from 1, so as to implement periodic counting of the control deviation data. It should be understood that for each counting operation, a time period composed of the first i preset durations represents the consecutive time period shown in FIG. 4.

For example, for the consecutive time period composed of the first i preset durations, a value, among respective measured signals [PitchAngle$_{measure}$, RotorSpeed$_{measure}$, Torque$_{measure}$, YawAngle$_{measure}$] of the pitch angle, the rotational speed, the torque, and the yaw angle, and their corresponding preset values [PitchAngle$_{design}$, RotorSpeed$_{design}$, Torque$_{design}$, YawAngle$_{design}$], of a certain control parameter, i.e. the pitch angle, the rotational speed, the torque, and the yaw angle, is determined as the input, and the control deviation between the measured signal and the preset value is calculated. The control parameter actually used may be selected according to the actual control requirements of the wind turbine. As shown in the following equation, Error represents the control deviation, Measure represents the measured signal, and Design represents the preset value for controlling.

$$Error = Measure - Design$$

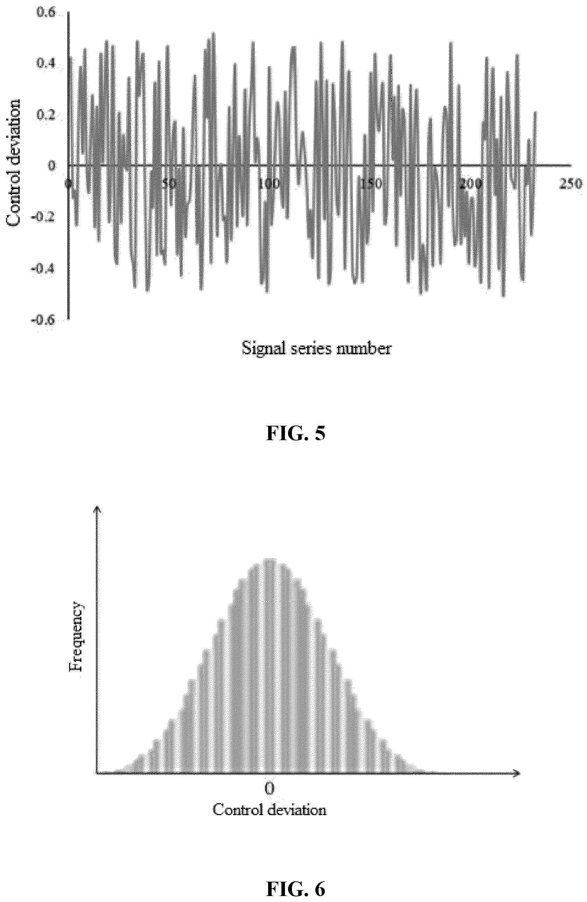

It is assumed that control deviations of a certain control parameter during the consecutive time period are as shown in FIG. 5. Statistical analysis is performed to obtain the values of respective control deviations and the occurrence numbers each corresponding to a value within the consecutive time period and use as a latest statistical result, and a schematic distribution diagram of the control deviations can be further obtained and shown in FIG. 6.

In a third step, fitting processing is performed on the i-th counting result to obtain an i-th distribution parameter of control deviations. A specific implementation of the fitting processing may refer to the fitting processing in the measurement-uncertainty analysis section mentioned earlier, including: determining a distribution type, and then performing fitting processing based on the distribution type to determine the distribution parameter, which will not be repeated herein.

In a fourth step, it is determined whether the i-th distribution parameter of control deviations and an (i-1)-th distribution parameter of control deviations satisfy a preset approximation condition. It should be understood that the preset approximation condition represents that distribution parameters as compared with each other are sufficiently close, such as but not limited to, a difference between the distribution parameters as compared with each other being less than 5%. For a case in which multiple specific parameters are involved, for example, the parameter of normal distribution includes a location parameter $\mu$ and a scale parameter $\sigma$, the multiple parameters may be processed to obtain a single parameter. For example, the multiple parameters are converted into one parameter, or a difference represented in a percentage is calculated for each parameter and then a statistical value (such as, a mean, a mode or a median) of the differences for these parameters is calculated, which is not limited in the present disclosure.

Based on the above determining, in response to the preset approximation condition being not satisfied, which indicates that the accumulated data is insufficient for reflecting a consistent distribution rule, then i is incremented by 1 and the second and fourth steps are repeated, that is, it continues to periodically count occurrence numbers of respective control deviations, perform the fitting processing to obtain a new distribution parameter of control deviations, and then determine whether the preset approximation condition is satisfied. In response to the preset approximation condition being satisfied, which indicates a stable and consistent distribution rule is obtained, then the i-th distribution parameter of control deviations is determined as the distribution parameter of control deviations during the reference time period, and a time period corresponding to the first i preset durations is determined as the reference time period, thereby completing one round of control-deviation analysis. At the same time, an end time instant of an i-th preset duration is determined as a start time instant of a new reference time period, and the second and fourth steps are repeated for the new reference time period to perform a new round of control-deviation analysis.

It should be understood that in the fourth step, if i=1, a distribution parameter, obtained by a previous round of control-deviation analysis during a reference time period, of control deviations during the reference time period may be used as the (i-1)-th distribution parameter of control deviations.

It should also be understood that after completing one round of control-deviation analysis, the obtained distribution parameter of the control deviations during the reference time period may be applied for the lag correction, and at the same time and simultaneously, data is re-accumulated for a new round of control-deviation analysis. Once a new distribution parameter of control deviations during a new reference time period is obtained, the new distribution parameter is used for the lag correction. In this way, a cycle is executed, where a distribution parameter of control deviations during the latest reference time period is continuously used for the lag correction. Since the obtained distribution parameter of the control deviations during the reference time period is used for the lag correction, theoretically, the control deviation will gradually reduce over time rather than remaining constant. By re-accumulating data in a new analysis round, a case in which the control-deviation data of the previous round is dominant such that the preset approximation condition is quickly satisfied can be avoided in early stages of the new analysis round. As such, it is conductive to performing effective statistical analysis of the new control-deviation data, thereby releasing the impact of older largely-deviated data on recent control-deviation analysis, which fully reflects recent control optimization effects, provides more reliable basis for updating a control-deviation analysis result, improves the control accuracy, and forms a virtuous cycle.

In an embodiment, the step of applying control-deviation analysis result to implement the lag correction, that is, the step of correcting the predictive distribution parameter for the control signal at the current time instant based on the distribution parameter of the control deviations during the reference time period, to obtain a corrected distribution parameter for the control signal at the current time instant, further includes: performing discretization processing on the predictive distribution parameter for the control signal at the current time instant, to obtain multiple control signals and multiple control signal probabilities of respective control signals; performing discretization processing on the distribution parameter of the control deviations during the reference time period, to obtain multiple control deviations and multiple control deviation probabilities of respective control deviations; for each control signal of the multiple control signals and each control deviation of the multiple control deviations, performing a superposition correction processing, to obtain a corrected control signal, and determining a product of a control signal probability of the control signal and a control deviation probability of the control deviation as a corrected probability of the corrected control signal; and performing fitting processing on the obtained corrected control signals and corrected probabilities of respective corrected control signals, to obtain the corrected distribution parameter for the control signal at the current time instant. Both the predictive distribution parameter for the control signal at the current time instant and the distribution parameter of the control deviations during the reference time period are a parameter of a continuous function. By performing discretization processing on the two distribution parameters respectively, multiple control signals and their probabilities, and multiple control deviations and their probabilities are obtained, facilitating to, for each control signal, form a pair with a control deviation, to perform the superposition correction processing. As such, it is possible to use a single control deviation to correct the lag of a single control signal, ensuring smooth execution of the correction process. It should be understood that, if M control signals and N control deviations are obtained after performing the discretization processing, $M \times N$ data pairs can be formed, and $M \times N$ corrected control signals and $M \times N$ corrected probabilities are obtained correspondingly. Some corrected control signals may have a same value, and these corrected control signals with the same value may be merged and a sum of the corrected probabilities of the corrected control signals with the same value is determined as a merged corrected probability.

For example, in an embodiment for step S102 where fitting processing is first performed on the multiple historical measured signals and then discretization is performed to obtain the one or more reference measured signals, the predictive distribution parameter for the control signal at the current time instant is obtained by performing the fitting processing on the one or more reference control signals each corresponding to a reference measured signal. In such a case, the fitting processing on the one or more reference control signals may be skipped in step S102, and the one or more reference control signals may be directly used for the lag correction in step S103, thereby reducing data to be processed and improving computational efficiency. It should be understood that, although the predictive distribution parameter for the control signal at the current time instant is not explicitly obtained here, the predictive distribution parameter for the control signal actually exists, thus remaining consistent with the description in step S102 in FIG. 2. Alternatively, the predictive distribution parameter for the control signal at the current time instant is explicitly obtained in step S102, and the discretization processing is performed during the lag correction, so as to obtain multiple control signals (for example, multiple control signals of an arithmetic progression) according to an expected rule, to meet different requirements of the superposition correction processing, which is not limited in the present disclosure.

The following provides further details on how to determine the control signal at the current time instant in step S103.

It should be understood that when the aforementioned lag correction is not performed, the predictive distribution parameter for the control signal at the current time instant may be directly used to determine the control signal at the current time instant. When the lag correction is performed, the corrected distribution parameter for the control signal at the current time instant may be used to determine the control signal at the current time instant. For ease of explanation, the predictive distribution parameter for the control signal at the current time instant will always be used below. For the case that the lag correction is performed, the predictive distribution parameter for the control signal at the current time instant is replaced with the corrected distribution parameter for the control signal at the current time instant, which will not be repeated herein.

In an embodiment, the step of determining the control signal at the current time instant includes: based on the predictive distribution parameter for the control signal at the current time instant, a correspondence between the control signal and a load, and a reference load range, determining the control signal at the current time instant. Since a specific control parameter is often related to a particular load component, a change of the control parameter will cause a change of a corresponding load component. By introducing the reference load range and by means of the correspondence between the control signal and the load, a reasonable control signal may be determined based on the predictive distribution parameter for the control signal at the current time instant with reference to the reference load range. In this way, it can ensure that the determined control signal conforms to the lag correction, being conductive to improving control accuracy; and it is also possible to enable the load component to fall within the reference load range after executing the corresponding control, thus ensuring safe turbine operation, and significantly improving the control efficiency. It should be understood that, to ensure operational safety, the reference load range must have an upper limit greater than 0, while a lower limit thereof may be greater than or equal to 0. For example, the lower limit may be calculated, be manually inputted by an operator, or be defaulted to 0, which is not limited in the present disclosure.

Regarding specific implementation of the above step, in some embodiments, optionally, the step may include: first determining a reference control signal range corresponding to the reference load range based on the correspondence between the control signal and the load; and then selecting a value, for example, a value corresponding to a maximum probability density value, from the reference control signal range as the control signal at the current time instant based on the predictive distribution parameter for the control signal at the current time instant.

In other embodiments, optionally, the step may include: first, based on the predictive distribution parameter for the control signal at the current time instant, the correspondence between the control signal and the load, and the reference load range, determining a probability of the load falling within the reference load range as a reference probability; then comparing the reference probability with a probability threshold, and determining the reference control signal range corresponding to the reference load range in response to the reference probability being greater than or equal to the probability threshold; determining power generation quantities respectively corresponding to multiple reference control signals within the reference control signal range based on a correspondence between a control signal and a power generation quantity; and determining the control signal at the current time instant from the multiple reference control signals based on the power generation quantities respectively corresponding to the multiple reference control signals. By determining the reference probability of the load falling within the reference load range, the likelihood of safe turbine operation is determined. A greater reference probability indicates a greater likelihood of safe turbine operation. For example, the calculated reference probability being 0.9 indicates that 90% of the load fall within the reference load range. At this time, the adjustable range of the control signal, that is, the reference control signal range, is relatively greater, and the selection is more flexible. Since the load is derived from the control signal, the reference control signal range may be inversely derived from the reference load range based on the correspondence between the control signal and the load. Within the reference control signal range, control scheme optimization is performed by using the power generation quantity as a reference, to search for a reference control signal which enables a maximum power generation quantity of the wind turbine and which does not exceed the reference load range as the optimal control scheme. In this embodiment, it can ensure wind turbine safety while maintain high control precision to handle variable and complex wind conditions, achieving more power output and improving economic benefits, thus being conductive to comprehensively improving control efficiency. It should be understood that the correspondence between the control signal and the power generation quantity may be obtained by an existing method like simulation, which is mature technology in the art and is not limited in the present disclosure. For example, the correspondence between the control signal and the load may be reflected in the existing SCADATOLOAD method, that is, when the load is derived from the control signal, the SCADATOLOAD method may be used to process the control signal to obtain the load.

In the aforementioned other embodiments, optionally and additionally, after comparing the reference probability with the probability threshold, in response to the reference probability being less than the probability threshold, a reference control signal corresponding to an upper limit value of the reference load range is determined as the control signal at the current time instant. When the reference probability is low, it may be considered that the load may likely exceed the reference load range, and it may be at a higher risk. At this time, an adjustable range of the control signal will be smaller. By directly determining the reference control signal corresponding to the upper limit value of the reference load range as the final control signal, it is not required to calculate the reference control signal range and perform control scheme optimization based on the power generation quantity, which can reasonably simplify a determination process of the control signal, reducing computational load, improving control efficiency, and can also reduce risks of a late control and load exceeding a limit due to excessive computation time, thereby enabling a more accurate and timely control.

Regarding the determination of the reference probability, it may include: first determining a load distribution parameter based on the predictive distribution parameter for the control signal at the current time instant and the correspondence between the control signal and the load; and then determining, based on the load distribution parameter and the reference load range, the probability of the load falling within the reference load range as the reference probability, e.g., calculating, by the probability density function of the load, a cumulative probability distribution value corresponding to the reference load range as the reference probability. Alternatively, it may also include: first determining the reference control signal range corresponding to the reference load range based on the correspondence between the control signal and the load; and then determining, based on the predictive distribution parameter for the control signal at the current time instant, the probability of the control signal falling within the reference control signal range as the reference probability, e.g., calculating, by the probability density function of the control signal, a cumulative probability distribution value corresponding to the reference control signal range as the reference probability. In other words, the reference probability may be calculated directly for either the load or the control signal. The calculated reference probabilities are theoretically equal due to the correspondence between the control signal and the load, which is not limited in the present disclosure.

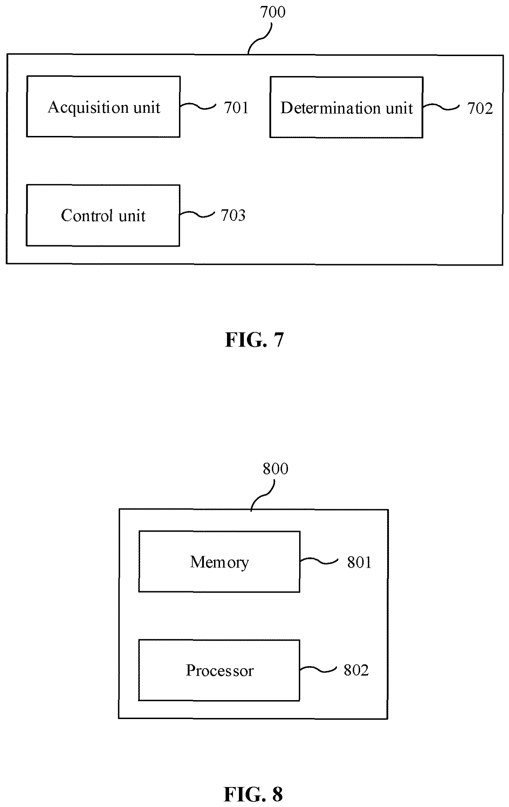

FIG. 7 is a block diagram of a control apparatus for a wind turbine according to an embodiment of the present disclosure.

Referring to FIG. 7, the control apparatus 700 for the wind turbine includes an acquisition unit 701, a determination unit 702, and a control unit 703.

The acquisition unit 701 is configured to acquire a preset value and multiple historical measured signals of a control parameter of the wind turbine during a historical time period.

The determination unit 702 is configured to determine a predictive distribution parameter for a control signal at a current time instant based on the preset value and the multiple historical measured signals.

The control unit 703 is configured to determine the control signal at the current time instant based on the predictive distribution parameter for a control signal at the current time instant.

In an embodiment, the determination unit 702 is further configured to: acquire one or more reference measured signals based on the multiple historical measured signals; and determine the predictive distribution parameter for the control signal at the current time instant based on the one or more reference measured signals and the preset value.

In an embodiment, the determination unit 702 is further configured to perform fitting processing on the multiple historical measured signals, to obtain a distribution parameter of the multiple historical measured signals; and perform discretization processing on the distribution parameter of the multiple historical measured signals, to obtain the one or more reference measured signals and one or more reference measured signal probabilities of respective reference measured signals.

In an embodiment, the determination unit 702 is further configured to: determine one or more reference control signals respectively corresponding to the one or more reference measured signals based on the one or more reference measured signals and the preset value, and determine the one or more reference measured signal probabilities of the respective reference measured signals as one or more reference control signal probabilities respectively; and perform fitting processing on the determined one or more reference control signals and the one or more reference control signal probabilities of respective reference control signals, to obtain the predictive distribution parameter for the control signal at the current time instant.

In an embodiment, the multiple historical measured signals are obtained by performing measurement through a measurement sensor. The determination unit 702 is further configured to perform fitting processing on the multiple historical measured signals based on a reference distribution type, to obtain the distribution parameter of the multiple historical measured signals. The reference distribution type is related to the measurement sensor; or the reference distribution type is obtained by: counting respective occurrence numbers of the multiple historical measured signals, to obtain a counting result of the multiple historical measured signals; and determining one distribution type from multiple candidate distribution types as the reference distribution type based on the counting result.

In an embodiment, the acquisition unit 701 is further configured to acquire a distribution parameter of control deviations during a reference time period, where each control deviation of the control deviations is a deviation between a measured signal and the preset value. The control unit 703 is further configured to: correct the predictive distribution parameter for the control signal at the current time instant based on the distribution parameter of the control deviations during the reference time period, to obtain a corrected distribution parameter for the control signal at the current time instant; and determine the control signal at the current time instant based on the corrected distribution parameter for the control signal at the current time instant.

In an embodiment, the acquisition unit 701 is further configured to: determine multiple consecutive preset durations starting from a start time instant; count occurrence numbers of respective control deviations within the first i preset durations, to obtain an i-th counting result, where i is a positive integer; perform fitting processing on the i-th counting result to obtain an i-th distribution parameter of control deviations; in response to the i-th distribution parameter of control deviations and an (i-1)-th distribution parameter of control deviations not satisfying a preset approximation condition, increment i by 1 and repeat the steps of counting occurrence numbers of respective control deviations within the first i preset durations, performing the fitting process, and determining whether the preset approximation condition is satisfied; and in response to the i-th distribution parameter of control deviations and the (i-1)-th distribution parameter of control deviations satisfying the preset approximation condition, determine the i-th distribution parameter of control deviations as the distribution parameter of the control deviations during the reference time period, determine a time period corresponding to the first i preset durations as the reference time period, determine an end time instant of an i-th preset duration as a start time instant of a new reference time period, and for the new reference time period, repeat the steps of counting occurrence numbers of respective control deviations within the first i preset durations, performing the fitting process, and determining whether the preset approximation condition is satisfied.

In an embodiment, the control unit 703 is further configured to: perform discretization processing on the predictive distribution parameter for the control signal at the current time instant to obtain multiple control signals and multiple control signal probabilities of respective control signals; perform discretization processing on the distribution parameter of the control deviations during the reference time period to obtain multiple control deviations and multiple control deviation probabilities of respective control deviations; for each control signal of the multiple control signals and each control deviation of the multiple control deviations, perform a superposition correction process to obtain a corrected control signal, and determine a product of a control signal probability of the control signal and a control deviation probability of the control deviation as a corrected probability of the corrected control signal; and perform fitting processing on the obtained corrected control signals and corrected probabilities of respective corrected control signals to obtain the corrected distribution parameter for the control signal at the current time instant.

In an embodiment, the control unit 703 is further configured to: determine the control signal at the current time instant based on the predictive distribution parameter for the control signal at the current time instant, a correspondence between the control signal and a load, and a reference load range.

In an embodiment, the control unit 703 is further configured to: determine a probability of the load falling within the reference load range as a reference probability based on the predictive distribution parameter for the control signal at the current time instant, the correspondence between the control signal and the load, and the reference load range; determine a reference control signal range corresponding to the reference load range in response to the reference probability being greater than or equal to a probability threshold; determine power generation quantities respectively corresponding to multiple reference control signals within the reference control signal range based on a correspondence between a control signal and a power generation quantity; and determine the control signal at the current time instant from the multiple reference control signals based on the power generation quantities respectively corresponding to the multiple reference control signals.

In an embodiment, the control unit 703 is further configured to: determine a reference control signal corresponding to an upper limit value of the reference load range as the control signal at the current time instant in response to the reference probability being less than the probability threshold.

With regard to the apparatus in the above-mentioned embodiments, the specific mode in which each unit performs the operation is described in detail in the embodiments related to the method, which will not be described in detail here.

The control method for a wind turbine according to an embodiment of the present disclosure can be programmed as computer programs and stored in a computer-readable storage medium. When the instructions corresponding to the computer programs are executed by a processor, the control method for a wind turbine as described above can be performed. Examples of computer-readable storage media include: a read-only memory (ROM), a random access programmable read-only memory (PROM), an electrically erasable programmable read-only memory (EEPROM), a random access memory (RAM), a dynamic random access memory (DRAM), a static random access memory (SRAM), a flash memory, a non-volatile memory, a CD-ROM, a CD-R, a CD+R, a CD-RW, a CD+RW, a DVD-ROM, a DVD-R, a DVD+R, a DVD-RW, a DVD+RW, a DVD-RAM, a BD-ROM, a BD-R, a BD-R LTH, a BD-RE, a Blu-ray or an optical disk memory, a hard disk drive (HDD), a solid state drive (SSD), a card memory (such as, a multimedia card, a secure digital (SD) card or an extreme digital (XD) card), a magnetic tape, a floppy disk, a magneto-optical data storage device, an optical data storage device, a hard disk, a solid state disk and any other devices. The any other devices are configured to store computer program and any associated data, data files and data structures in a non-transitory manner and provide the computer program and any associated data, data files and data structures to a processor or computer so that the processor or computer can execute the computer program. In an example, the computer program and any associated data, data files and data structures are distributed on a networked computer system so that the computer program and any associated data, data files and data structures are stored, accessed and executed in a distributed manner by one or more processors or computers.

FIG. 8 is a block diagram of a computer device according to an embodiment of the present disclosure.

Referring to FIG. 8, the computer device 800 includes at least one memory 801 and at least one processor 802. The at least one memory 801 stores a set of computer-executable instructions. The set of the computer-executable instructions, when executed by the at least one processor 802, causes the at least one processor to perform the control method for a wind turbine according to the embodiments of the present disclosure.

For example, the computer device 800 may be a personal computer (PC), a tablet device, a personal digital assistant, a smart phone, or other device capable of executing the set of instructions as described above. The computer device 800 is not necessarily a single electronic device, and may also be any set of devices or circuits capable of individually or jointly executing the above instructions (or instruction sets). The computer device 800 may also be a part of an integrated control system or a system manager, or may be configured as a portable electronic device that is interconnected locally or remotely (for example, via wireless transmission) with an interface.

In the computer device 800, the processor 802 may include a central processing unit (CPU), a graphics processing unit (GPU), a programmable logic device, a dedicated processor system, a microcontroller, or a microprocessor. As an example rather than a limitation, the processor may further include an analog processor, a digital processor, a microprocessor, a multi-core processor, a processor array, a network processor, and the like.

The processor 802 may run instructions or codes stored in the memory 801, and the memory 801 may further store data. Instructions and data can be transmitted and received over a network via a network interface device, and the network interface device may adopt any known transmission protocol.

It should be understood that the processor in the control system for a wind turbine according to an embodiment of the present disclosure may be of a similar hardware structure as the processor 802 herein.

The memory 801 may be integrated with the processor 802. For example, a RAM or a flash memory is arranged in an integrated circuit microprocessor or the like. In addition, the memory 801 may include an independent device, such as an external disk drive, a storage array, or other storage device that may be used by any database system. The memory 801 and the processor 802 may be operatively coupled, or may communicate with each other, for example, via an I/O port, a network connection, or the like, to enable the processor 802 to read files stored in the memory.

In addition, the computer device 800 may also include a video display (such as a liquid crystal display) and a user interaction interface (such as a keyboard, a mouse, a touch input device, or the like). All components of the computer device 800 may be connected to each other via a bus and/or a network.

A control method, apparatus and system for a wind turbine, and a storage medium are provided according to the present disclosure. By acquiring a preset value and multiple historical measured signals of a control parameter during a historical time period, the uncertainty of a measured signal at a current time instant can be reflected through the multiple historical measured signals, thereby obtaining a predictive distribution parameter for a control signal at the current time instant in combination with the preset value of the control parameter. Compared with the conventional solution in which the control signal at the current time instant is directly determined based on the measured signal at the current time instant, the control signal is determined from a probabilistic and statistical perspective while fully considering the uncertainty of the measured signal according to the present disclosure, releasing the impact of the uncertainty of the conventional measurement sensor on control accuracy without additional expensive high-precision sensors, and achieving the improvement of control accuracy at low cost. Furthermore, by acquiring a distribution parameter of control deviations during a reference time period, a potential control deviation of a new control signal can be predicted in advance from a probabilistic and statistical perspective, implementing a correction to the predictive distribution parameter for a control signal at the current time instant, and further improving the control accuracy.

The embodiments of the present disclosure are described in detail hereinabove. Although only some embodiments of the present disclosure are shown and described, it should be understood by those skilled in the art that, these embodiments can be modified and improved, without departing from the principle and spirit of the present disclosure which is defined by the claims and their equivalents, and such modifications and improvements also fall within the protection scope of claims of the present disclosure.

**Claims**

1. A control method for a wind turbine, comprising:

acquiring a preset value and a plurality of historical measured signals of a control parameter of the wind turbine during a historical time period;
determining a predictive distribution parameter for a control signal at a current time instant based on the preset value and the plurality of historical measured signals; and
determining the control signal at the current time instant based on the predictive distribution parameter for the control signal at the current time instant.

2. The control method according to claim 1, wherein the determining a predictive distribution parameter for the control signal at a current time instant based on the preset value and the plurality of historical measured signals comprises:

acquiring one or more reference measured signals based on the plurality of historical measured signals; and
determining the predictive distribution parameter for the control signal at the current time instant based on the one or more reference measured signals and the preset value.

3. The control method according to claim 2, wherein the acquiring one or more reference measured signals based on the plurality of historical measured signals comprises:

performing fitting processing on the plurality of historical measured signals, to obtain a distribution parameter of the plurality of historical measured signals; and
performing discretization processing on the distribution parameter of the plurality of historical measured signals, to obtain the one or more reference measured signals and one or more reference measured signal probabilities of respective reference measured signals.

4. The control method according to claim 3, wherein the determining the predictive distribution parameter for the control signal at the current time instant based on the one or more reference measured signals and the preset value comprises:

determining one or more reference control signals respectively corresponding to the one or more reference measured signals based on the one or more reference measured signals and the preset value, and determining the one or more reference measured signal probabilities of the respective reference measured signals as one or more reference control signal probabilities respectively; and
performing fitting processing on the determined one or more reference control signals and the one or more reference control signal probabilities of respective reference control signals, to obtain the predictive distribution parameter for the control signal at the current time instant.

5. The control method according to claim 3, wherein the plurality of historical measured signals are obtained by performing measurement through a measurement sensor,
and wherein the performing fitting processing on the plurality of historical measured signals to obtain a distribution parameter of the plurality of historical measured signals comprises:
performing fitting processing on the plurality of historical measured signals based on a reference distribution type, to obtain the distribution parameter of the plurality of historical measured signals, wherein

the reference distribution type is related to the measurement sensor; or
the reference distribution type is obtained by:

counting respective occurrence numbers of the plurality of historical measured signals, to obtain a counting result of the plurality of historical measured signals; and
determining one distribution type from a plurality of candidate distribution types as the reference distribution type based on the counting result.

6. The control method according to any one of claims 1 to 5, wherein before the determining the control signal at the current time instant based on the predictive distribution parameter for the control signal at the current time instant, the control method further comprises:

acquiring a distribution parameter of control deviations during a reference time period, wherein each control deviation of the control deviations is a deviation between a measured signal and the preset value, and wherein the determining the control signal at the current time instant based on the predictive distribution parameter for the control signal at the current time instant comprises:

correcting the predictive distribution parameter for the control signal at the current time instant based on the distribution parameter of the control deviations during the reference time period, to obtain a corrected distribution parameter for the control signal at the current time instant; and

determining the control signal at the current time instant based on the corrected distribution parameter for the control signal at the current time instant.

7. The control method according to claim 6, wherein the acquiring a distribution parameter of control deviations during a reference time period comprises:

determining a plurality of consecutive preset durations starting from a start time instant;

counting occurrence numbers of respective control deviations within the first i preset durations, to obtain an i-th counting result, wherein i is a positive integer;

performing fitting processing on the i-th counting result to obtain an i-th distribution parameter of control deviations;

in response to the i-th distribution parameter of control deviations and an (i-1)-th distribution parameter of control deviations not satisfying a preset approximation condition, incrementing i by 1 and repeating the steps of counting occurrence numbers of respective control deviations within the first i preset durations, performing the fitting process, and determining whether the preset approximation condition is satisfied; and

in response to the i-th distribution parameter of control deviations and the (i-1)-th distribution parameter of control deviations satisfying the preset approximation condition, determining the i-th distribution parameter of control deviations as the distribution parameter of the control deviations during the reference time period, determining a time period corresponding to the first i preset durations as the reference time period, determining an end time instant of an i-th preset duration as a start time instant of a new reference time period, and for the new reference time period, repeating the steps of counting occurrence numbers of respective control deviations within the first i preset durations, performing the fitting process, and determining whether the preset approximation condition is satisfied.

8. The control method according to claim 6, wherein the correcting the predictive distribution parameter for the control signal at the current time instant based on the distribution parameter of the control deviations during the reference time period, to obtain a corrected distribution parameter for the control signal at the current time instant comprises:

performing discretization processing on the predictive distribution parameter for the control signal at the current time instant to obtain a plurality of control signals and a plurality of control signal probabilities of respective control signals;

performing discretization processing on the distribution parameter of the control deviations during the reference time period to obtain a plurality of control deviations and a plurality of control deviation probabilities of respective control deviations;

for each control signal of the plurality of control signals and each control deviation of the plurality of control deviations, performing a superposition correction process to obtain a corrected control signal, and determining a product of a control signal probability of the control signal and a control deviation probability of the control deviation as a corrected probability of the corrected control signal; and

performing fitting processing on the obtained corrected control signals and corrected probabilities of respective corrected control signals to obtain the corrected distribution parameter for the control signal at the current time instant.

9. The control method according to any one of claims 1 to 5, wherein the determining the control signal at the current time instant based on the predictive distribution parameter for the control signal at the current time instant comprises:

determining the control signal at the current time instant based on the predictive distribution parameter for the control signal at the current time instant, a correspondence between the control signal and a load, and a reference load range.

10. The control method according to claim 9, wherein the determining the control signal at the current time instant based on the predictive distribution parameter for the control signal at the current time instant, a correspondence between the control signal and a load, and a reference load range comprises:

determining a probability of the load falling within the reference load range as a reference probability based on the predictive distribution parameter for the control signal at the current time instant, the correspondence between the control signal and the load, and the reference load range;

determining a reference control signal range corresponding to the reference load range in response to the reference probability being greater than or equal to a probability threshold;

determining power generation quantities respectively corresponding to a plurality of reference control signals within the reference control signal range based on a correspondence between a control signal and a power generation quantity; and

determining the control signal at the current time instant from the plurality of reference control signals based on the power generation quantities respectively corresponding to the plurality of reference control signals.

11. The control method according to claim 10, wherein the determining the control signal at the current time instant based on the predictive distribution parameter for the control signal at the current time instant, a correspondence between the control signal and a load, and a reference load range further comprises:
determining a reference control signal corresponding to an upper limit value of the reference load range as the control signal at the current time instant in response to the reference probability being less than the probability threshold.

12. A control apparatus for a wind turbine, comprising:

an acquisition unit, configured to acquire a preset value and a plurality of historical measured signals of a control parameter of the wind turbine during a historical time period;

a determination unit, configured to determine a predictive distribution parameter for a control signal at a current time instant based on the preset value and the plurality of historical measured signals; and

a control unit, configured to determine the control signal at the current time instant based on the predictive distribution parameter for the control signal at the current time instant.

13. A control system for a wind turbine, comprising:

a measurement sensor, configured to collect a measured signal of a control parameter;
a processor, configured to:

acquire a preset value and a plurality of historical measured signals of a control parameter of the wind turbine during a historical time period; and

determine a predictive distribution parameter for a control signal at a current time instant based on the preset value and the plurality of historical measured signals; and

a control decision device, configured to determine the control signal at the current time instant based on the predictive distribution parameter for the control signal at the current time instant.

14. The control system according to claim 13, wherein the processor is further configured to:

acquire one or more reference measured signals based on the plurality of historical measured signals; and
determine the predictive distribution parameter for the control signal at the current time instant based on the one or more reference measured signals and the preset value.

15. The control system according to claim 14, wherein the processor comprises:

a first signal analyzer, configured to perform fitting processing on the plurality of historical measured signals, to obtain a distribution parameter of the plurality of historical measured signals; and

a first controller, configured to perform discretization processing on the distribution parameter of the plurality of historical measured signals, to obtain the one or more reference measured signals and one or more reference measured signal probabilities of respective reference measured signals.

16. The control system according to claim 15, wherein the first controller is further configured to:

determine one or more reference control signals respectively corresponding to the one or more reference measured signals based on the one or more reference measured signals and the preset value, and determine the one or more reference measured signal probabilities of the respective reference measured signals as one or more reference control signal probabilities respectively; and

perform fitting processing on the determined one or more reference control signals and the one or more reference control signal probabilities of respective reference control signals, to obtain the predictive distribution parameter for the control signal at the current time instant.

17. The control system according to claim 15, wherein the first signal analyzer is further configured to:

perform fitting processing on the plurality of historical measured signals based on a reference distribution type, to obtain the distribution parameter of the plurality of historical measured signals, wherein

the reference distribution type is related to the measurement sensor; or
the reference distribution type is obtained by:

counting respective occurrence numbers of the plurality of historical measured signals, to obtain a counting result of the plurality of historical measured signals; and
determining one distribution type from a plurality of candidate distribution types as the reference distribution type based on the counting result.

18. The control system according to any one of claims 13 to 17, wherein the processor further comprises:

a second signal analyzer, configured to acquire a distribution parameter of control deviations during a reference time period, wherein each control deviation of the control deviations is a deviation between a measured signal and the preset value; and
a second controller, configured to correct the predictive distribution parameter for the control signal at the current time instant based on the distribution parameter of the control deviations during the reference time period, to obtain a corrected distribution parameter for the control signal at the current time instant,
and wherein the control decision device is further configured to determine the control signal at the current time instant based on the corrected distribution parameter for the control signal at the current time instant.

19. The control system according to claim 18, wherein the second signal analyzer is further configured to:

determine a plurality of consecutive preset durations starting from a start time instant;
count occurrence numbers of respective control deviations within the first $i$ preset durations, to obtain an $i$-th counting result, wherein $i$ is a positive integer;
perform fitting processing on the $i$-th counting result to obtain an $i$-th distribution parameter of control deviations;
in response to the $i$-th distribution parameter of control deviations and an $(i-1)$-th distribution parameter of control deviations not satisfying a preset approximation condition, increment $i$ by 1 and repeat the steps of counting occurrence numbers of respective control deviations within the first $i$ preset durations, performing the fitting process, and determining whether the preset approximation condition is satisfied; and
in response to the $i$-th distribution parameter of control deviations and the $(i-1)$-th distribution parameter of control deviations satisfying the preset approximation condition, determine the $i$-th distribution parameter of control deviations as the distribution parameter of the control deviations during the reference time period, determine a time period corresponding to the first $i$ preset durations as the reference time period, determine an end time instant of an $i$-th preset duration as a start time instant of a new reference time period, and for the new reference time period, repeat the steps of counting occurrence numbers of respective control deviations within the first $i$ preset durations, performing the fitting process, and determining whether the preset approximation condition is satisfied.

20. The control system according to claim 18, wherein the second controller is further configured to:

perform discretization processing on the predictive distribution parameter for the control signal at the current time instant to obtain a plurality of control signals and a plurality of control signal probabilities of respective control signals;
perform discretization processing on the distribution parameter of the control deviations during the reference time period to obtain a plurality of control deviations and a plurality of control deviation probabilities of respective control deviations;
for each control signal of the plurality of control signals and each control deviation of the plurality of control deviations, perform a superposition correction process to obtain a corrected control signal, and determine a product of a control signal probability of the control signal and a control deviation probability of the control deviation as a corrected probability of the corrected control signal; and

perform fitting processing on the obtained corrected control signals and corrected probabilities of respective corrected control signals to obtain the corrected distribution parameter for the control signal at the current time instant.

21. The control system according to any one of claims 13 to 17, wherein the control decision device is further configured to: determine the control signal at the current time instant based on the predictive distribution parameter for the control signal at the current time instant, a correspondence between the control signal and a load, and a reference load range.

22. The control system according to claim 21, wherein the control decision device is further configured to:

determine a probability of the load falling within the reference load range as a reference probability based on the predictive distribution parameter for the control signal at the current time instant, the correspondence between the control signal and the load, and the reference load range;

determine a reference control signal range corresponding to the reference load range in response to the reference probability being greater than or equal to a probability threshold;

determine power generation quantities respectively corresponding to a plurality of reference control signals within the reference control signal range based on a correspondence between a control signal and a power generation quantity; and

determine the control signal at the current time instant from the plurality of reference control signals based on the power generation quantities respectively corresponding to the plurality of reference control signals.

23. The control system according to claim 22, wherein the control decision device is further configured to: determine a reference control signal corresponding to an upper limit value of the reference load range as the control signal at the current time instant in response to the reference probability being less than the probability threshold.

24. A computer-readable storage medium, wherein instructions in the computer-readable storage medium, when executed by at least one processor, cause the at least one processor to perform the control method for a wind turbine according to any one of claims 1 to 11.

25. A computer device, comprising:

at least one processor; and
at least one memory storing computer-executable instructions, wherein
the computer-executable instructions, when executed by the at least one processor, cause the at least one processor to perform the control method for a wind turbine according to any one of claims 1 to 11.

**FIG. 1**

EP 4 668 033 A1

Acquire a preset value and multiple historical measured signals of a control parameter of a wind turbine during a historical time period — S101

Determine a predictive distribution parameter for a control signal at a current time instant based on the preset value and the multiple historical measurement signals — S102

Determine the control signal at the current time instant based on the predictive distribution parameter for the control signal at the current time instant — S103

**FIG. 2**

**FIG. 3**

**FIG. 4**

**FIG. 5**

**FIG. 6**

700

Acquisition unit 701

Determination unit 702

Control unit 703

**FIG. 7**

800

Memory 801

Processor 802

**FIG. 8**

## INTERNATIONAL SEARCH REPORT

| International application No. |
| --- |
| **PCT/CN2023/142611** |

| A. | CLASSIFICATION OF SUBJECT MATTER |
| --- | --- |

G05B19/04(2006.01)i

According to International Patent Classification (IPC) or to both national classification and IPC

| B. | FIELDS SEARCHED |
| --- | --- |

Minimum documentation searched (classification system followed by classification symbols)

G05B

Documentation searched other than minimum documentation to the extent that such documents are included in the fields searched

Electronic data base consulted during the international search (name of data base and, where practicable, search terms used)

CNTXT; ENTXT; ENTXTC; VEN; WPABSC; CNKI: 万方, WANFANG; IEEE: 北京金风, 韩炜, 米玉霞, 张鹏飞, 风机, 风力发电机, 风能, 风场, 风电场, 历史, 参数, 不确定性, 不确定度, 分布, 传感器, 概率密度函数, 概率分布, 预估, 估计, 控制, 设定数据, 设定值, 预设数据, 预设值, 目标, wind, turbine, generator, power, historical, data, nondeterminacy, indeterminacy, sensor, probability density function, parameter, control, preset value

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113193572 A (STATE GRID JIANGSU ELECTRIC POWER CO., LTD. et al.) 30 July 2021 (2021-07-30) description, paragraphs [0019]-[0079] | 1-3, 9, 12-15, 21, 24, 25 |
| A | CN 106979717 A (SHENZHEN DAS INTELLITECH CO., LTD.) 25 July 2017 (2017-07-25) entire document | 1-25 |
| A | CN 110700995 A (SANY HEAVY ENERGY CO., LTD.) 17 January 2020 (2020-01-17) entire document | 1-25 |
| A | CN 111765052 A (BEIJING GOLDWIND SCIENCE & CREATION WINDPOWER EQUIPMENT CO., LTD.) 13 October 2020 (2020-10-13) entire document | 1-25 |
| A | CN 111900743 A (NANJING DONGBO SMART ENERGY RESEARCH INSTITUTE CO., LTD.) 06 November 2020 (2020-11-06) entire document | 1-25 |

| ✓ | Further documents are listed in the continuation of Box C. | ✓ | See patent family annex. |
| --- | --- | --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 April 2024** | **15 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/142611** |

### C. DOCUMENTS CONSIDERED TO BE RELEVANT

| Category* | Citation of document, with indication, where appropriate, of the relevant passages | Relevant to claim No. |
|---|---|---|
| A | CN 108167119 A (BEIJING GOLDWIND SCIENCE & CREATION WINDPOWER EQUIPMENT CO., LTD.) 15 June 2018 (2018-06-15)<br>entire document | 1-25 |
| A | WO 2021164112 A1 (SHANDONG UNIVERSITY) 26 August 2021 (2021-08-26)<br>entire document | 1-25 |

Form PCT/ISA/210 (second sheet) (July 2022)

## INTERNATIONAL SEARCH REPORT
### Information on patent family members

| International application No. |
| --- |
| **PCT/CN2023/142611** |

| Patent document cited in search report | | | Publication date (day/month/year) | Patent family member(s) | Publication date (day/month/year) |
| --- | --- | --- | --- | --- | --- |
| CN | 113193572 | A | 30 July 2021 | None | |
| CN | 106979717 | A | 25 July 2017 | None | |
| CN | 110700995 | A | 17 January 2020 | None | |
| CN | 111765052 | A | 13 October 2020 | None | |
| CN | 111900743 | A | 06 November 2020 | None | |
| CN | 108167119 | A | 15 June 2018 | None | |
| WO | 2021164112 | A1 | 26 August 2021 | None | |

Form PCT/ISA/210 (patent family annex) (July 2022)